Europäisches Patentamt

European Patent Office

Office européen des brevets

(19)

(11) EP 0 745 634 A1

## (12) EUROPEAN PATENT APPLICATION

(43) Date of publication:
04.12.1996 Bulletin 1996/49

(51) Int Cl.6: **C08G 77/445**, C08G 77/448, C08G 64/08, C08G 64/18, C08L 83/16, C08L 67/02, C08L 69/00

(21) Application number: 96303520.9

(22) Date of filing: 17.05.1996

(84) Designated Contracting States:
BE DE ES FR GB IT NL

(30) Priority: 30.05.1995 US 453857

(71) Applicant: GENERAL ELECTRIC COMPANY
Schenectady, NY 12345 (US)

(72) Inventors:
• King, Joseph Anthony, Jr.
Schenectady, New York 12309 (US)

• Davis, Gary Charles
Albany, New York 12205 (US)

(74) Representative: Szary, Anne Catherine
London Patent Operation,
GE International, Inc.,
Essex House,
12-13 Essex Street
London WC2R 3AA (GB)

(54) **Method for making poly(arylsiloxane)compositions**

(57) A method for making poly(arylsiloxane) compositions is described and the method comprises the step of polymerizing under melt polymerization conditions siloxane monomers and/or poly(arylsiloxanes) and at least one member selected from carbonate monomers, polycarbonate, polyesters and polyorganosiloxanes.

EP 0 745 634 A1

## Description

### Field of the Invention

This invention relates to a novel method for making poly(arylsiloxane) compositions. The method is a melt preparation and does not require the use of environmentally unfriendly solvents.

### Background of the Invention

In an effort to prepare polymeric materials for a variety of commercial applications, nonmetallic polymer compositions have been made for use as coatings, plastics, adhesives, elastomers and the like. Such polymer compositions can be silane polymers of diols that may be prepared, for example, by contacting dichlorobenzene, aromatic diols and silanes under alcoholysis type condensation conditions.

Other attempts to prepare such compositions include those of which react chlorosilane and dihydroxydiphenyl ethers under condensing conditions as well as those prepared via the interfacial condensation of phosgene in the presence of polymer and siloxane.

It is of increasing interest, however, to prepare polymeric compositions via methods that do not employ environmentally unfriendly solvents. Moreover, it is of increasing interest to prepare poly(arylsiloxane) compositions that not only have a high incorporation of siloxanes, but also improved flame retardant properties and hydrolytic stability as well.

### Description of the Prior Art

Efforts have been disclosed for making poly(aryloxysiloxane) blends. In U.S. Patents 5,187,243 and 5,334,672, blends of poly(aryloxysiloxanes) and thermoplastic polymers are prepared by dry mixing polymer components followed by extrusion in a twin screw extruder.

### Summary of the Invention

The instant invention is directed to a novel method for making poly(arylsiloxane) compositions, said method comprises the step of contacting under melt polymerization conditions:

(a) at least one member selected from the group consisting of

(i) siloxane monomers having the formula

$$\underset{R^1}{\overset{R}{\diagdown}}\,Si\,\underset{R^1}{\overset{R}{\diagup}}$$

wherein each R is independently a hydrogen, $C_{1\text{-}10}$ alkyl group or substituted or unsubstituted aryl group, with the proviso that at least one R is an aryl group and each $R^1$ is independently a hydroxy group, carboxylate group, alkoxy group, aryloxy group or amino group and

(ii) a functionalized poly(arylsiloxanes); and

(b) at least one member selected from the group consisting of carbonate monomers, ester monomers, macrocyclic polycarbonate oligomers, macrocyclic polyester oligomers, polycarbonates, polyesters, poly(organosiloxanes) and mixtures thereof.

### Detailed Description of the Preferred Embodiments

The siloxane monomers often employed in the method described in this invention and depicted by formula I are known and commercially available. Moreover, the carbonate monomers and ester monomers employed in this invention are also commercially available and known. The carbonate monomers are preferably substituted or unsubstituted diarylcarbonates and most preferably diphenylcarbonates. The ester monomers employed are preferably isophthalic and terephthalic acid substituted or unsubstituted diaryl esters and preferably terephthalic acid diphenylesters.

There is no limitation with respect to the functionalized poly(arylsiloxanes) mentioned in (ii) above other than that they are those which are capable of forming poly(arylsiloxane) compositions with the members described in (b). "Functionalized" as used herein is deigned as having, for example, any functional group capable of reacting with the siloxane monomers and members in (b). Often they include hydroxy, alkoxy, trialkyl, triaryl or silicon and oxygen comprising groups. Moreover, it is often preferred that the functional group is an end-capping group. Illustrative examples of such poly(arylsiloxanes) include, for instance, poly(siloxybiaryloxides) like the poly(silyloxytetraalkylbiphenylene oxides) described in U.S. Patent 5,041,514, the disclosure of which is incorporated herein by reference. Other poly(arylsiloxanes) which may be employed in this invention include homopolymer poly(arylsiloxanes) having the formula

$$\text{II}$$

wherein:

(a) each R is as previously defined;
(b) X is a hydrogen, a $C_{1-10}$ alkyl group or a $C_{1-10}$ acyl group;
(c) Y is a bridging radical and preferably a divalent arylene group and most preferably a divalent phenylene group;
(d) Z is a substituted or unsubstituted phenyl group;
(e) q is 0 or 1 and n is about 5 to about 1,000 and preferably about 50 to about 300 and most preferably from about 10 to about 50; and
(f) p is 0 or 1, with the proviso that p and q cannot simultaneously be 0.

Still other poly(arylsiloxanes) which may be employed in this invention include those which are the reaction product of, for instance, bis(anilino)diarylsilane and organic diols such as hydroquinone and resorcinol. Such reaction products are described in Curry et al., *Journal of Applied Polymer Sciences,* Vol. 9, pp. 295-31 (1965), the disclosure of which is incorporated herein by reference.

The preferred polycarbonates employed in the invention may comprise structural units of the formulae

$$-O-A^1-O-\overset{\overset{\displaystyle O}{\|}}{C}- \qquad \text{III}$$

and

$$-O-A^2-Y_r-A^3-O-\overset{\overset{\displaystyle O}{\|}}{C}- \quad , \quad \text{IV}$$

wherein IV is a preferred subgenus of III and $A^1$ is a divalent substituted or unsubstituted aliphatic, alicyclic or aromatic radical, preferably $-A^2-Y_r-A^3-$ wherein $A^2$ and $A^3$ are each independently a monocyclic divalent aromatic radical. Y is as previously defined and r is 0 or 1.

The A$^2$ and A$^3$ values may be unsubstituted phenylene or substituted derivatives thereof, illustrative substituents (one or more) being alkyl, alkenyl, alkoxy and the like. Unsubstituted phenylene radicals are preferred. Both A$^2$ and A$^3$ are preferably p-phenylene, although both may be o- or m-phenylene or one o- or m-phenylene and the other p-phenylene.

For reasons of availability and particular suitability for the purposes of this invention, the preferred units of formula IV are 2,2-bis(4-phenylene)propane carbonate units, which are derived from bisphenol A and in which Y is isopropylidene and A$^2$ and A$^3$ are each p-phenylene.

The material represented by formula V

$$HO\text{-}A^1\text{-}OH , \qquad\qquad\qquad V$$

is the source of structural units of formula III above; A$^1$ is as previously defined.

Illustrative non-limiting examples of V include:

2,2-bis(4-hydroxyphenyl)-propane (bisphenol A);
2,2-bis(3,5-dibromo-4-hydroxyphenyl)propane;
2,2-bis(3,5-dimethyl-4-hydroxyphenyl)propane;
1,1 -bis(4-hydroxyphenyl)cyclohexane;
1,1-bis(3,5-dimethyl-4-hydroxyphenyl)cyclohexane;
1,1-bis(4-hydroxyphenyl)decane;
1,4-bis(4-hydroxyphenyl)propane;
1,1-bis(4-hydroxyphenyl)cyclododecane;
1,1-bis(3,5-dimethyl-4-hydroxyphenyl)cyclododecane;
4,4-dihydroxydiphenyl ether;
4,4-thiodiphenol;
4,4-dihydroxy-3,3-dichlorodiphenyl ether;
4,4-dihydroxy-3,3-dihydroxydiphenyl ether;
1,3 benzenediol;
1,4-benzenediol; and
spirobiindanediol.

Other useful dihydroxyaromatic compounds which are also suitable for use in the preparation of the above copolycarbonates are disclosed in U.S. Patents 2,999,835; 3,028,365; 3,334,154 and 4,131,575, all of which are incorporated herein by reference. The preferred bisphenol is 2,2-bis(4-hydroxyphenyl)propane (bisphenol A).

The polycarbonates (homopolycarbonates or copolycarbonates) employed in the instant invention may be straight chain or branched as well as graft polymers. They may be prepared, for instance, by reacting bisphenols with a carbonate source such as phosgene or dimethyl carbonate using conventional techniques. These include melt polymerization, interfacial polymerization and interfacial conversion with bischloroformate followed by polymerization. Chain termination agents such as phenol, p-cumylphenol and p-t-butylphenol may also be employed.

Other preferred polycarbonates that may be employed in this invention include those prepared from spirobiindane bisphenols. Such bisphenols are prepared by contacting a mixture of a bisphenol or a 4-isopropylphenol and a 1-(4-hydroxyphenyl)indanol with a metal halide Lewis acid or an alkanesulfonic acid. A more detailed description of the spirobiindane bisphenols that may be used as polycarbonate precursors in this invention are described in U.S. Patent 4,701,566, the disclosure of which is incorporated herein by reference.

Additionally, the macrocyclic polycarbonate oligomers that may be employed in this invention are known and may be prepared, for instance, by condensing bisphenol A bishaloformates, sodium hydroxide and triethylamine in an organic solvent or organic-aqueous two phase solvent system. A more detailed description of such preparation may be found in U.S. Patent 4,644,053, the disclosure of which is incorporated herein by reference.

The often preferred polyesters that may be employed in this invention include, for example, poly(1,2-ethylene terephthalate), poly(1,4-butylene terephthalate), poly(1,2-ethylene 2,6-naphthalenedicarboxylate) and the like. Such polyesters are known and described, for instance, in U.S. Patents 4,132,707 and 4,125,571, the disclosures of which are incorporated herein by reference.

The macrocyclic polyester oligomers employed in this invention often include macrocyclic poly(ethylene terephthalate) (PET), poly(1,4-butylene terephthalate) (PBT) and poly(1,2-ethylene 2,6-naphthalenedicarboxylate) (PEN) oligomers and any macrocyclic co-oligomers prepared therefrom.

Such macrocyclic polyester oligomers are often prepared by a method which comprises contacting at least one diol and at least one diacid chloride under substantially anhydrous conditions and in the presence of a substantially water immiscible organic solvent, with at least one unhindered tertiary amine; said contact being conducted at a temperature from about -25° to about +25°C. A more detailed description for the preparation of the above-mentioned macrocyclic polyester oligomers employed in this invention may be found in commonly assigned U.S. Patent 5,039,783, the disclosure of which is incorporated herein by reference.

Typical poly(organosiloxanes) which may be employed in this invention include those having the formula

$$\left( \begin{array}{c} R^2 \\ | \\ R^2-Si-O \\ | \\ R^2 \end{array} \right)_t \begin{array}{c} R^2 \\ | \\ Si-R^2 \\ | \\ R^2 \end{array} \quad VI$$

wherein each $R^2$ is independently a $C_{1-10}$ alkyl, aryl, vinyl hydroxy or alkoxy group and t has a value such that the viscosity of the poly(organosiloxane) is in the range of about 100-1,000,000, preferably about 1,000 to 250,000 and most preferably about 2,500 to 100,000 centipoise at 25°C.

There is no limitation with respect to the reaction vessel employed in this invention; in fact, any vessel capable of heating the monomers and/or oligomers employed in this invention may be used. Such reaction vessels often can include batch or continuous mixers like glass melt polymerization reactors, helicones as well as extruders.

When preparing the poly(arylsiloxane) compositions of this invention, the siloxane monomers and/or polyarylsiloxanes described in (a) and the members described in (b) may be added simultaneously or in no particular order into the reaction vessel. Heating and optionally mixing may begin prior to, during or after the addition of the monomers and members to the reaction vessel. The only limitation is that the resulting reaction mixture is allowed to melt to unexpectedly produce a homogeneous liquid or uniform emulsion. Additionally, polymerization catalysts such as aqueous tetraalkylammonium formates may be added at anytime to the reaction vessel and their addition is often preferred when the reaction temperature is less than about 220°C. In any event, subsequent to heating the reaction mixture, polymerization occurs producing a viscous poly(arylsiloxane) composition melt and any volatiles such as phenols are collected and recycled. It is further noted herein, that when homopolymer poly(arylsiloxane) compositions are desired, it may be necessary to add carbonate monomers or ester monomers when the members selected from (b) are not monomers. Such a requirement may be necessary in order to achieve proper stoichiometric ratios needed to produce any desired homopolymer poly(arylsiloxane) compositions.

Unexpectedly, in the instant invention, the melt polymerization occurs in the absence of solvents since the siloxane monomers and/or poly(arylsiloxanes) described in (a) and the members described in (b) act as the liquid phase during the melt polymerization. Additionally, the poly(arylsiloxane) compositions obtained unexpectedly display improved flame retardancy since they have a high oxygen index. High oxygen index as used throughout is defined as an increase of at least about 3 units in the oxygen index (in comparison to a base composition free of siloxy units) when the compositions comprise at least about 2 weight percent siloxy units based on total weight of the composition. Said high oxygen index has been confirmed via ASTM test D2863-70.

Moreover, there is no limitation with respect to the amount of siloxy units that may be present in the compositions prepared via the instant invention; however, compositions comprising at least about 2% by weight based on total weight of the compositions are often preferred.

Additionally, compositions are defined herein to include, for instance, any copolymers or blends resulting from the melt polymerization of the members described in (a) and (b).

The following examples are provided to further facilitate an understanding of the invention. The products obtained may be confirmed by conventional techniques including carbon-13 proton and silicon-29 nuclear magnetic resonance spectroscopy, mass spectroscopy, infrared spectroscopy and GPC analysis.

**Example 1**

A one liter glass melt polymerization reactor apparatus was charged with 100 grams (0.437 mol) of bisphenol A, 105.6 grams (0.488 mol) of diphenylsilanediol and 218.4 grams (1.019 mol) of diphenylcarbonate to produce a powder mixture. A helixing stirrer was suspended in the powder for mixing. The apparatus was deoxygenated three times at 760 mm Hg by filling it with purified nitrogen. The apparatus was then immersed in a fluidized heat bath preheated to 180°C. The powdered mixture was stirred and allowed to melt producing a homogeneous liquid. After a complete solution was obtained, the solution was allowed to thermally equilibrate for about 5 to 10 minutes. The resulting solution was continuously stirred at 250 rpm producing an equilibrated solution.

To the equilibrated solution was added aqueous tetramethylammonium formate (204 µL of a 2.21 M solution (4.5 $\times$ 10$^{-4}$ mol)) and aqueous NaOH (0.050 mL of a 0.25 M solution (7.5 $\times$ 10$^{-6}$ mol)) producing a polymerization mixture. The polymerization mixture was stirred at 180°C for 5 min after which the reaction temperature was increased to 210°C and the pressure was lowered to 183 mm Hg. At this time, phenol began to distill into a collection flask from the apparatus and after 35 minutes, the apparatus pressure was lowered to 100 mm Hg and held there for an additional 35 minutes. Phenol continued to distill into the collection flask until a total volume of about 100 mL was collected. The temperature was then raised to 240°C for 30 minutes after which about an additional 50 mL of phenol were collected. The temperature was again raised to 270°C and held for 20 minutes and finally raised to 300°C for an additional 90 minutes.

A total of 205.1 grams of distillate were collected. Additionally, homogeneous, transparent copolymer product (50 wt % diphenylsiloxane-bisphenol A polycarbonate) was collected. Mw of the product was 10,042, the intrinsic viscosity taken at 25°C in chloroform was 0.111 and the glass transition temperature (Tg) was 70.4°C,

## Example 2

Example 2 was prepared in a manner similar to the one described in Example 1 except that the melt polymerization reactor apparatus was charged with 200 grams (0.876 mol) of bisphenol A, 50.0 grams (0.222) of diphenylsilanediol and 258.9 grams (1.21 mol) of diphenylcarbonate.

A total of 237.5 grams of distillate were collected. Additionally, homogeneous, transparent copolymer product (20 wt % diphenylsiloxane-bisphenol A polycarbonate) was collected. Mw of the product was 104,884, the intrinsic viscosity taken in chloroform was 0.509 and the Tg was 123°C.

## Example 3

An extruder apparatus was charged with 790 grams of bisphenol A polycarbonate and 100 grams of the product obtained in Example 2. The barrel temperatures were set at 176.7°C and the die temperature was 279.4°C. The screw speed was 150 rpm and the feed rate was about 15 pounds per hour. Subsequent to extruding and drying at 120°C, the clear pellets obtained were injection molded on a 30 ton molder with barrel temperatures set at 298.9°C. The cycle time was approximately 30 seconds and the molded parts obtained were completely transparent. The molded parts were 50% immersed in water at 120°C for 5 days after which the parts showed less than 15% Mw degradation indicating hydrolytic stability.

## Example 4

Example 4 was prepared in a manner similar to the one described in Example 1 except that the melt polymerization reactor apparatus was charged with 26.4 grams (0.116 mol) of bisphenol A, 100 grams (0.462 mol) diphenylsilanediol and 136.4 grams (0.636 mol) of diphenylcarbonate.

A total of 126.3 grams of distillate were collected. Additionally, homogeneous, transparent copolymer product (80 wt % diphenylsiloxane-bisphenol A polycarbonate) were collected. Mw of the product was 5,416, the intrinsic viscosity taken in chloroform was 0.051 and the Tg was 104.8°C.

## Example 5

Example 5 was prepared in a manner similar to the one described in Example 1 except that the melt polymerization reactor apparatus was charged with 100.1 grams (0.439 mol) of bisphenol A, 94.5 grams (0.4369 mol) diphenylsilanediol and 202.8 grams (0.947 mol) of diphenylcarbonate and 1.36 mL of aqueous tetramethylammonium hydroxide (0.221 M solution (3.0 $\times$ 10$^{-4}$ mol)) in lieu of aqueous tetramethylammonium formate.

A total of 185 grams of distillate were collected. Additionally, homogeneous, transparent copolymer product (50 mol % diphenylsiloxane-bisphenol A polycarbonate) was collected. Mw of the product was 17,012, the intrinsic viscosity taken in chloroform was 0.156 and the Tg was 80.0°C.

## Example 6

Example 6 was prepared in a manner similar to the one described in Example 1 except that the melt polymerization reactor apparatus was charged with 200.0 grams (0.972 mol) of bisphenol A, 11.07 grams (0.051 mol) of diphenylsilanediol and 230.25 grams (1.08 mol) of diphenylcarbonate.

A total of 198.6 grams of distillate were collected. Additionally, homogeneous, transparent copolymer product (5 mol % diphenylsiloxane-bisphenol A polycarbonate) was collected. Mw of the product was 39,885, the intrinsic viscosity taken in chloroform was 0.422 and the Tg was 137.6°C.

**Example 7**

Example 7 was prepared in a manner similar to the one described in Example 1 except that the melt polymerization reactor apparatus was charged with 192.0 grams (0.841 mol) of bisphenol A, 48 grams of polydiphenylsilanediol and 248.5 grams (1.160 mol) of diphenylcarbonate.

A total of 235.9 grams of distillate were collected. Additionally, homogeneous, transparent copolymer product (20 wt % polydiphenylsiloxane-bisphenol A polycarbonate) was collected. The Mw of the product was 24,543, the intrinsic viscosity of the product taken in chloroform was 0.273 and the Tg of the product was 125.5°C.

**Claims**

1. A method for making poly(arylsiloxane) compositions comprising the step of contacting under melt polymerization conditions:

    (a) at least one member selected from the group consisting of

        (i) siloxane monomers having the formula

$$\underset{R^1}{\overset{R}{\underset{\diagdown}{}}}Si\underset{R^1}{\overset{R}{\diagup}}$$

    wherein each R is independently a hydrogen, $C_{1-10}$ alkyl or substituted or unsubstituted aryl, with the proviso that at least one R is an aryl group and each $R^1$ is independently a hydroxy, carboxylate, alkoxy, aryloxy or amino group and

        (ii) functionalized poly(arylsiloxanes); and

    (b) at least one member selected from the group consisting of carbonate monomers, ester monomers, macrocyclic polycarbonate oligomers, macrocyclic polyester oligomers, polycarbonates, polyesters, poly(organosiloxanes) and mixtures thereof.

2. A method in accordance with claim 1 wherein said functionalized poly(arylsiloxanes) are poly(siloxybiaryloxides).

3. A method in accordance with claim 2 wherein said poly(arylsiloxanes) have the formula

EP 0 745 634 A1

wherein:

(a) each R is as previously defined;
(b) X is a hydrogen, a $C_{1-10}$ alkyl group or a $C_{1-10}$ acyl group;
(c) Y is a bridging radical;
(d) Z is a substituted or unsubstituted phenyl group;
(e) q is 0 or 1 and n is about 5 to about 1,000; and
(f) p is 0 or 1 with the proviso that p and q are not simultaneously 0.

4. A method in accordance with claim 1 wherein said carbonate monomers are substituted or unsubstituted diarylcarbonates.

5. A method in accordance with claim 4 wherein said diarylcarbonates are diphenylcarbonates.

6. A method in accordance with claim 1 wherein said ester monomers are isophthalic or terephthalic acid substituted or unsubstituted diaryl esters.

7. A method in accordance with claim 6 wherein said ester monomers are terephthalic acid diphenylesters.

8. A method in accordance with claim 1 wherein the members in (b) are polycarbonates and macrocyclic polycarbonate oligomers derived from 2,2-bis(4-hydroxyphenyl)-propane.

9. A method in accordance with claim 1 wherein the members in (b) are polyesters poly(1,2-ethylene terephthalate), poly(1,4-butylene terephthalate) or poly(1,2-ethylene 2,6-naphthalenedicarboxylate).

10. A method in accordance with claim 1 wherein the members in (b) are macrocyclic polyester oligomers and macrocyclic poly(1,2-ethylene terephthalate), poly(1,4-butylene terephthalate) or poly(1,2-ethylene 2,6-naphthalenedicarboxylate) oligomers.

11. A method in accordance with claim 1 wherein said poly(organosiloxanes) have the formula

wherein each $R^2$ is independently a $C_{1-10}$ alkyl, aryl or vinyl, hydroxy or alkoxy group and t has a value such that the viscosity of the poly(organosiloxane) is in the range of about 100-1,000,000, preferably about 1,000 to 250,000

8

and most preferably about 2,500 to 100,000 centipoise at 25°C.

12. A method in accordance with claim 1 wherein said method further comprises the step of adding a polymerization catalyst.

13. A method in accordance with claim 12 wherein said polymerization catalyst is a tetraalkylammonium formate.

**European Patent Office**

# EUROPEAN SEARCH REPORT

Application Number

EP 96 30 3520

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X,D | US-A-5 187 243 (JORDAN THERESE C ET AL) 16 February 1993 * column 3, line 28 - line 38 * --- | 1-13 | C08G77/445 C08G77/448 C08G64/08 C08G64/18 C08L83/16 C08L67/02 C08L69/00 |
| X,D | US-A-5 334 672 (JORDAN THERESE C ET AL) 2 August 1994 * column 4, line 27 - line 63 * --- | 1-13 | |
| X | EP-A-0 402 674 (GEN ELECTRIC) 19 December 1990 * page 5, line 49; claim 1 * --- | 1-13 | |
| X | EP-A-0 594 175 (MITSUBISHI PETROCHEMICAL CO) 27 April 1994 * claims 1,2,6,17-19; examples 21-23,27 * ----- | 1-13 | |

**TECHNICAL FIELDS SEARCHED (Int.Cl.6)**

C08G
C08L

The present search report has been drawn up for all claims

| Place of search | Date of completion of the search | Examiner |
|---|---|---|
| MUNICH | 9 July 1996 | Hoffmann, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)